# EUROPEAN PATENT APPLICATION

(11) **EP 2 722 785 A1**
(43) Date of publication of application: **23.04.2014**
(21) Application number: 12392002.7
(22) Date of filing: 19.10.2012
(51) Int. Cl.: G06F 21/57, G06F 21/85, G06F 21/88

(54) **Mobile security with associated vital function device**

(71) Applicant: Dialog Semiconductor B.V., 5215 MV 's-Hertogenbosch (NL)
(72) Inventor: De Haas, Joek, 5506 CD Veldhoven (NL)
(74) Representative: Schuffenecker, Thierry

(57) **Abstract**

Mobile electronic devices and related methods to achieve an enhanced security level are disclosed. A security module is deeply embedded in a non-open associated vital functions chip of the mobile device, wherein the associated chip controls vital functions of the mobile device. Any security technology can be provided by the security module. The security module can, in case of a security violation, disable vital functions of the associated chip without requiring communicating to other components of the mobile device. The vital functions deployed in the associated chip comprise e.g. system power management, battery, display, and/or audio functions.

## Description

### Technical Field

This disclosure relates generally to the field of mobile electronic devices and relates more specifically to security solutions implemented in associated vital functions chips of mobile electronic devices.

### Background Art

Mobile platforms are generally secured against unauthorized usage in order to prevent brand, revenue streams, or untrusted applications. Security concepts are implemented either in SIM/SD cards, companion chips, or in the Application Processor.

SIM/SD cards are removable and sensitive to attacks on their connectors. Application processors are intrinsically more secure, however the open software development culture (App's, Android) make it challenging to keep security robust.

Companion chips (device) are part of a set of chips. Their function can only be effective when they are linked together with another chip. The disadvantage is that they need to communicate to other components and this is seen as security vulnerability.

It is a challenge for the designers of security solutions to overcome the disadvantages mentioned above.

### Summary of the invention

A principal object of the present disclosure is to achieve a maximum security level on mobile electronic devices.

A further object of the present disclosure is to implement a security solution in an associated chip, which controls vital functions of the application of the mobile electronic device.

A further object of the present disclosure is to store secure elements in an associated chip, which controls vital functions of the application of the mobile electronic device.

A further object of the present disclosure is to avoid security loopholes due to open software architecture.

In accordance with the objects of this disclosure a method to enhance a security level of an electronic mobile device has been achieved The method disclosed comprises the steps of (1) providing a non-open associated vital function chip of an electronic mobile device, wherein the associated chip controls vital functions of the mobile device, and (2) embedding deeply a security module in the associated device and wherein, in case of security problems, no communication to other components outside the associated chip is required.

In accordance with the objects of this disclosure a mobile electronic device with enhanced security level has been achieved. The mobile device comprises a non-open associated vital function device controlling vital functions of the mobile device, wherein a security module, which is controlling the security of the mobile device, is embedded in the associated device, and wherein, in case of security problems, no communication to other components outside the associated chip is required.

### Description of the drawings

In the accompanying drawings forming a material part of this description, there is shown:
**Fig. 1** illustrates a block diagram of a security solution of a mobile electronic platform implemented deeply embedded in a non-open associated vital function device.
**Fig. 2** illustrates a flowchart of a method to enhance a security level of an electronic mobile device.

### Description of the preferred embodiments

The preferred embodiments of the present disclosure disclose security solutions implemented on an associated vital function chip of mobile electronic devices. The associated chip controls vital functions of one or more applications of the mobile electronic device. Associated chips (device) are of a set of chips. Their function can only be effective when they are linked together with another chip. They are ideally suited for implementing (i.e. storing secure keys etc.) the security concept on mobile platforms as they are generally not open. These vital functions comprise essential application functions as well as essential system functions. In case of security problem there is no need to communicate to other components of the chip set hence the level of security is significantly enhanced.

Using functions within associated devices such as battery management, power management, audio coding/decoding, backlight control, display management, etc., the complete security concept can be kept within the device enhancing the security level. Thereby security vulnerabilities caused by a need to communicate to other components are avoided and the security level of the mobile device is significantly enhanced by the non-open characteristic of the associated device.

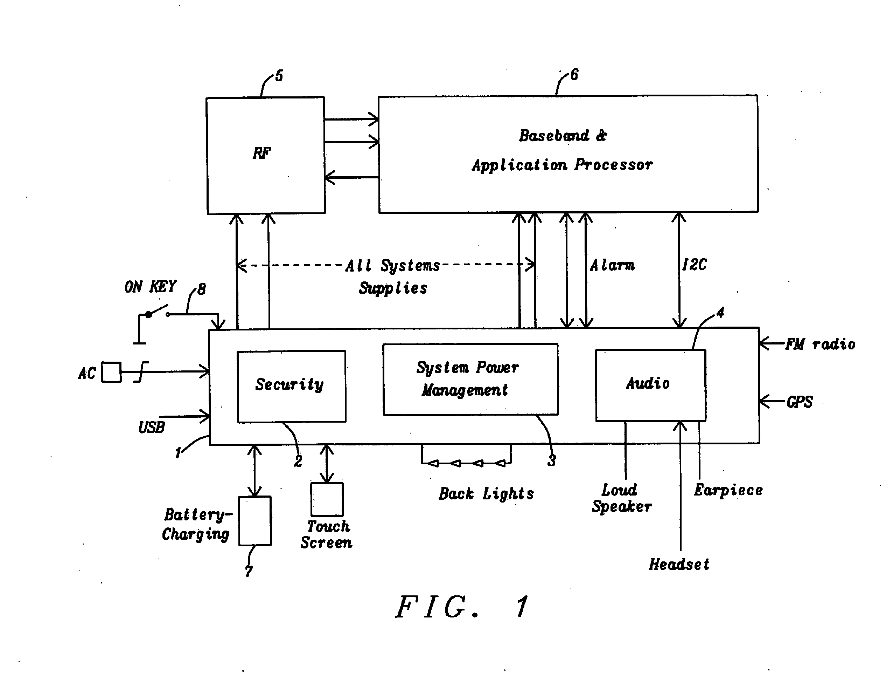

**Fig. 1** illustrates a block diagram of a non-limiting example of a security solution of a mobile electronic platform implemented deeply embedded in a non-open associated device wherein, in case of security problems, no communication to other components outside the associated chip is required.

**Fig. 1** shows an associated vital functions chip **1** controlling vital functions of the mobile device such as security module **2,** power management **3,** ON/OFF key 8, and audio support **4.**

The power management **3** comprises supplying all systems of the electronic device such as radio frequency functions **5** and a baseband and application processor 6. The power management system **3** of the associated chip **1** may comprise a number of DC-to-DC converters (LDOs and buck converters) and may supply and control displays including back-light support, e.g. LEDs, OLEDs, and dimming. Furthermore the power management **5** may support battery charging **7** including state-of-charge (SOC) and state of health (SOH) and control of charging e.g. via USB or via an AC-to-DC converter. Moreover the power management may supply the baseband and audio processor **6,** an radio frequency (RF) processor **5,** touch screens, one or more loudspeakers, a headset, and an earpiece, etc. An audio processor **4** may also be embedded in the associated chip **1.**

The power management system **3** may supply power to all components of the mobile device or to major parts only of all components of the mobile device.

In summary it should to be noted that the non-open associated chip **1** controls vital functions of the mobile electronic device and, in case the security module **2** detects any security violation, it disables the mobile device without requiring communicating to other components of the mobile device. This enhances the security level of the mobile device because the non-open associated chip **1** cannot be hacked. The non-open associated chip, i.e. the security module, is a safe place to store security items as e.g. secure keys.

The security module **2,** which is deeply embedded in the non-open associated chip **1,** may comprise any effective security application, as e.g. password protection, fingerprint control, face or eye recognition, or physical unclonable functions (PUF), containing a secure container (private keys) and cryptographic functions (AES, DES,MD5, SHA etc).

As just one example of a multitude of security techniques that could be implemented in a non-open associated chip as disclosed herein, a physical unclonable function (PUF) could be used, which implements challenge-response authentication. When a physical stimulus is applied to the structure, it reacts in an unpredictable way determined by the physical microstructure of the device. The exact microstructure depends on physical factors unintentionally introduced during manufacture which are unpredictable.

It should be noted that the above shows only examples of a multitude of security technologies, which can be controlled by the security module **2,** which is embedded deeply in the non-open associated chip **1.** "Non-open" is a function that cannot be altered other than by chip manufacturer. "Embedding deeply" means to be resistant to tampering, cloning, reverse engineering, etc.

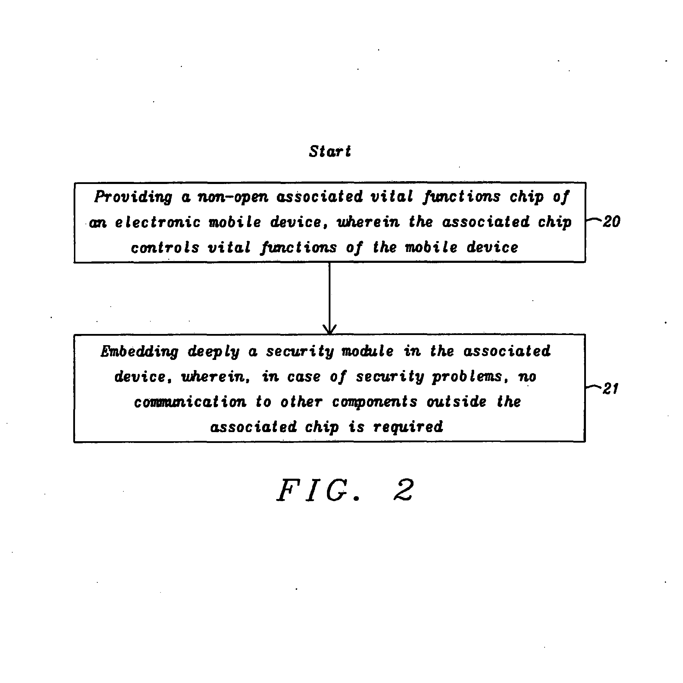

**Fig. 2** illustrates a flowchart of a method to enhance a security level of an electronic mobile device. A first step **20** describes the provision of a non-open associated chip of an electronic mobile device, wherein the associated chip controls vital functions of the mobile device. Step **21** illustrates embedding deeply a security module in the associated device.

While the disclosure has been particularly shown and described with reference to the preferred embodiments thereof, it will be understood by those skilled in the art that various changes in form and details may be made without departing from the spirit and scope of the disclosure.

## Claims

1. A method to enhance a security level of an electronic mobile device comprising the steps of
(1) providing a non-open associated vital functions chip of an electronic mobile device, wherein the associated chip controls vital functions of the mobile device; and
(2) embedding deeply a security module in the associated device, wherein, in case of security problems, no communication to other components outside the associated chip is required.

2. The method of claim 1 wherein said vital functions comprise essential system functions or essential application functions.

3. The method of claim 1 wherein said vital functions comprise power management functions.

4. The method of claim 3 wherein the power management functions comprise power management of all components of the mobile device, or power management of a major part of all components of the mobile device, or power management of displays, or power management of touch screens.

5. The method of claim 1 wherein said vital functions comprise audio functions, or battery management functions.

6. The method of claim 1 wherein said security module supports pass word protection, or finger print protection, or physical unclonable functions (PUF) implementing challenge-response authentication.

7. A mobile electronic device with enhanced security level comprising:
a non-open associated vital functions device controlling vital functions of the mobile device, wherein a security module, which is controlling the security of the mobile device, is embedded in the associated device and wherein, in case of security problems, and wherein, in case of security problems, no communication to other components outside the associated chip is required.

8. The device of claim 7 wherein said vital functions comprise essential system functions or essential application functions.

9. The device of claim 7 wherein said vital functions comprise power management functions.

10. The device of claim 9 wherein the power management functions comprise power management of all components of the mobile device, or power management of a major part of all components of the mobile device.

11. The device of claim 9 wherein the power management functions comprise power management of displays, or power management of touch screens.

12. The device of claim 7 wherein said vital functions comprise audio functions, or battery management functions.

13. The device of claim 7 wherein said security module supports pass word protection, or finger print protection, or physical unclonable functions (PUF).

14. The device of claim 7 wherein said physical unclonable functions (PUF) include implementing challenge-response authentication.

15. The device of claim 7 wherein the security module stores secure keys.
